# EUROPEAN PATENT APPLICATION

(11) **EP 1 956 749 A2**
(43) Date of publication of application: **13.08.2008**
(21) Application number: 08002299.9
(22) Date of filing: 07.02.2008
(51) Int. Cl.: H04L 12/18

(54) **Broadcast method in a mobile communication system**

(30) Priority: 09.02.2007 JP 2007030569
(71) Applicant: NEC Corporation, Minato-ku Tokyo (JP)
(72) Inventor: Ishii, Tatsuya, Tokyo 108-8001 (JP)
(74) Representative: Glawe, Delfs, Moll

(57) **Abstract**

A broadcast method in a mobile communication system is disclosed. When the same information is broadcast to a plurality of cells, broadcast is carried out in a radio base station device.

## Description

### BACKGROUND OF THE INVENTION

### 1. Field of the Invention :

The present invention relates to a mobile communication system, and more particularly, to a method of broadcasting in a radio base station.

### 2. Description of the Related Art :

In mobile communication systems, such as for example mobile telephone systems, control signals and data signals on common channels are conventionally transmitted in units called cells. However, a service that broadcasts the same data signal to multiple cells, such as MBMS (Multimedia Broadcast Multicast Service), needs to transmit the same data signal to the respective cells. As a radio base station typically handles a number of cells and a radio control device thus transmits the same signal to the respective cells, traffic on a transmission line between the radio base station and the radio control device may increase unnecessarily.

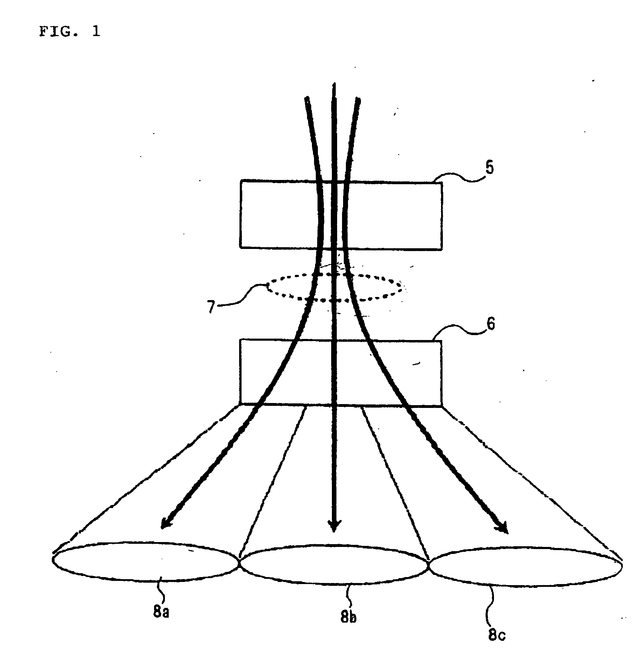

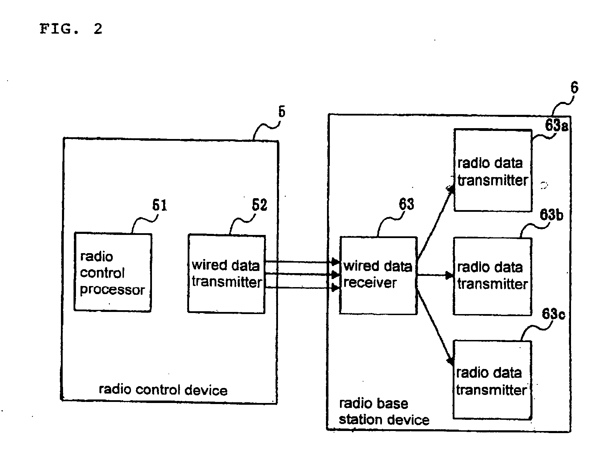

FIG. 1 shows as an example a mobile communication system which broadcasts the same data to three cells. In this system, the same data is transmitted from radio control device 5 to three cells 8a, 8b and 8c via radio base station device 6 which manages those cells. As shown in FIG. 2, radio control device 5 includes radio control processor 51 and wired data transmitter 52, and radio base station device 6 includes wired data receiver 61 and radio data transmitters 62a, 62b and 62c. In this system, radio control device 5 is required to transmit three pieces of the same data onto inter-device transmission channel 7, which produces unnecessary traffic.

With the recent growth in the number of users and/or a diversity of services in mobile communication systems, an increasing amount of data has been transmitted over the networks of such systems. In addition, it is desired to minimize the amount of traffic on a transmission channel between network devices because high-rate data cannot be transmitted due to physical restrictions of the channel or because the data rate has to be kept low in terms of cost. While broadcast services such as MBMS are under consideration, there is no mechanism for realizing broadcast at a radio base station under the present standards. Traffic between a radio base station and a radio control device can thus increase unnecessarily.

JP2004-15609A discloses that a base station adds, to data, multicast identification data for specifying that the data is transmitted to all of multiple subscriber stations, and multicasts the data to each of the subscriber stations by utilizing the capability of radio communication to simultaneously transmit to multiple recipients.

### SUMMARY OF THE INVENTION

It is an object of the present invention to provide a broadcast method, a mobile communication system, a radio control device, and a radio base station device for eliminating an unnecessary increase in traffic over a network when the same information is broadcast to a number of cells in a mobile communication system.

According to the invention, the radio base station device performs a broadcast when the same information is to be broadcast to a number of cells.

By broadcasting a data signal in the radio base station device, it is possible to eliminate unnecessary traffic increase on an inter-device transmission channel between the radio control device and the radio base station device.

The above and other objects, features and advantages of the present invention will become apparent from the following description with reference to the accompanying drawings which illustrate examples of the present invention.

### BRIEF DESCRIPTION OF THE DRAWINGS

FIG. 1 is a view showing the configuration of a related system;
FIG. 2 is a block diagram of a radio control device and a radio base station device of FIG. 1;
FIG. 3 is a view showing a system configuration according to a first exemplary embodiment of the invention;
FIG. 4 is a block diagram of a radio control device and a radio base station device of FIG. 3;
FIG. 5 is a sequence chart illustrating the operation of the first exemplary embodiment;
FIG. 6 shows a system configuration according to a second exemplary embodiment of the invention;
FIG. 7 is a block diagram of the radio control device and the radio base station device of FIG. 4; and
FIG. 8 is a sequence chart illustrating the operation of the second exemplary embodiment.

### DETAILED DESCRIPTION OF THE PREFERRED EMBODIMENTS

### [First Exemplary Embodiment]

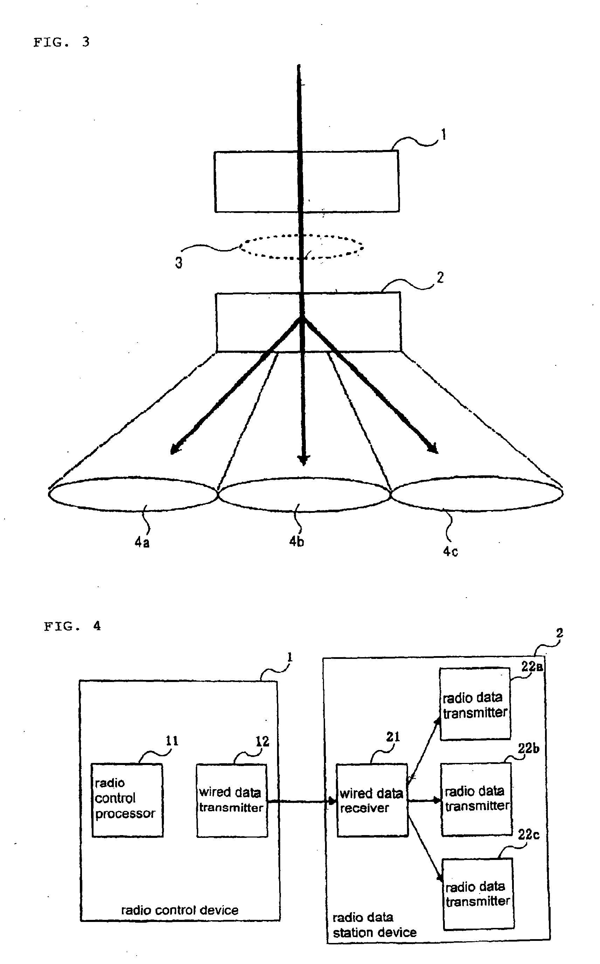

Referring to FIG. 3, a mobile communication system according to a first exemplary embodiment of the invention comprises radio control device 1, radio base station device 2, inter-device transmission channel 3, and cells 4a, 4b, and 4c.

As shown in FIG. 4, radio control device 1 includes radio control processor 11 and wired data transmitter 12. Radio base station device 2 includes wired data receiver 21 and radio data transmitters 22a, 22b, and 22c.

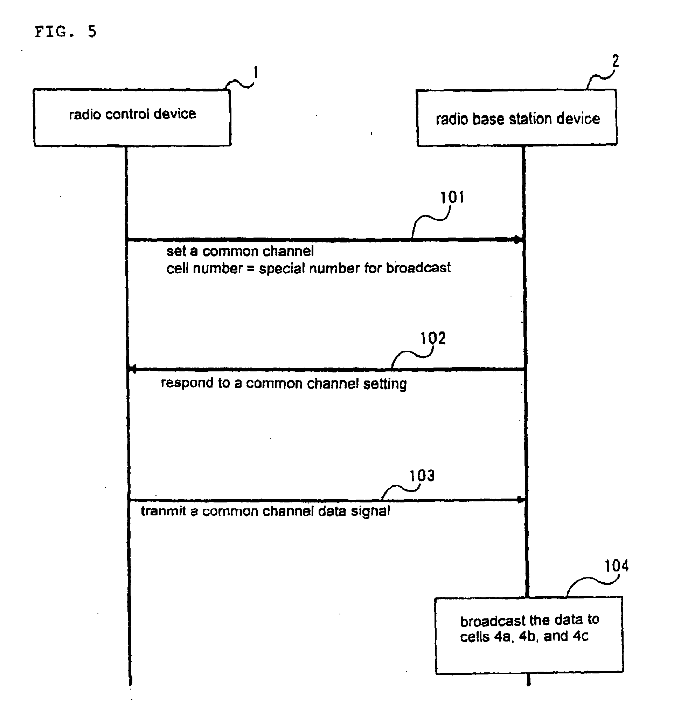

The operation of this exemplary embodiment will be described below with reference to the sequence chart of FIG. 5.

Radio controller 11 in radio control device 1 sets a special number for broadcast in the cell number in a control signal for setting a common channel used for broadcast and sets the number in radio base station 2 (step 101). Upon receipt of a response from radio base station device 2 (step 102), wired data transmitter 12 transmits a common channel data signal to be broadcast to radio base station device 2 via inter-device transmission channel 3 (step 103). Here, rather than transmitting as many pieces of data as there are cells, a single item of the data is transmitted just as when it transmitted to a single cell. Upon receipt of the data signal, wired data receiver 21 in radio base station device 2 broadcasts the data to transmit the data to cells 4a, 4b and 4c from radio data transmitters 22a, 22b and 22c (step 104).

In this manner, by performing the broadcast in radio base station device 2, which has not been conventionally carried out, traffic on inter-device transmission channel 3 can be significantly reduced (to one third in this example).

### [Second Exemplary Embodiment]

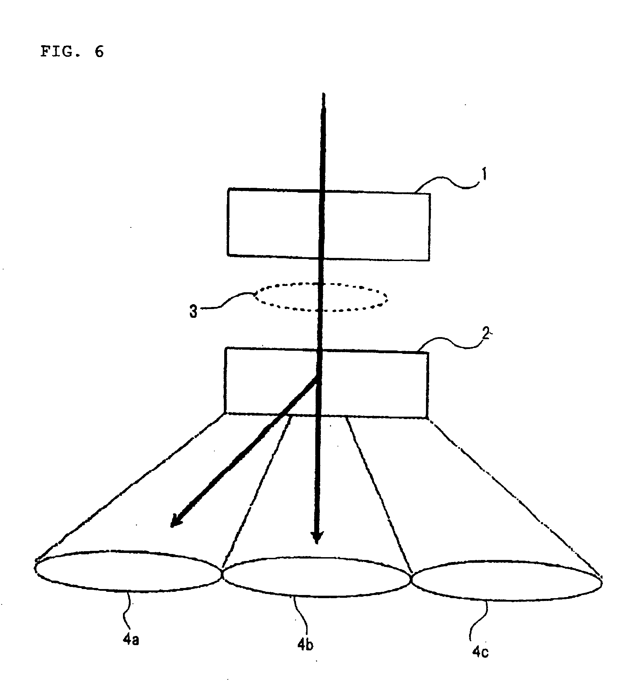

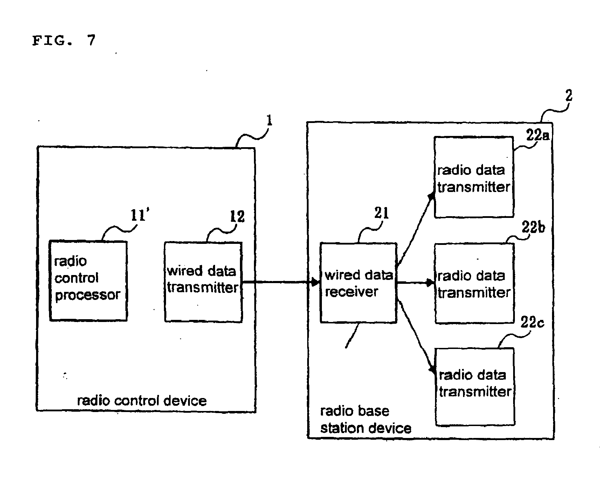

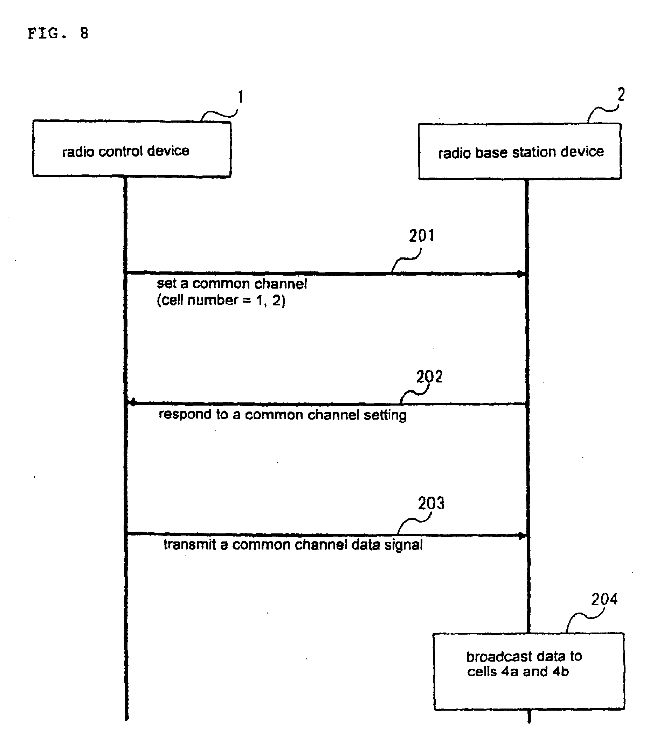

The exemplary embodiment shown in FIG. 3 can only broadcast data to all cells managed by radio base station device 2. However, in a second exemplary embodiment shown in Figs. 6 to 8, data is broadcasted to particular cells which are under the management of radio base station device 2. Initially, radio control processor 11' in radio control device 1 specifies multiple cell numbers in the cell number in a control signal for setting a common channel and sets the numbers in radio base station 2 (step 201). Upon receipt of a response from radio base station device 2 (step 202), wired data transmitter 12 transmits a common channel data signal to be broadcast to radio base station device 2 over inter-device transmission channel 3 (step 203). Wired data receiver 21 in radio base station device 2 broadcasts the data only to cells having the specified cell numbers (step 204). In this case, as shown in FIG. 6, the data is delivered only to cell 4a (number 1) and cell 4b (number 2), and not to cell 4c (number 3). Although this exemplary embodiment has a smaller effect in reducing traffic on the inter-device transmission channel as compared with the exemplary embodiment shown in FIG. 3, it is effective when there are users who do not receive broadcasting services in cell 4c (number 3), for example.

While preferred embodiments of the present invention have been described using specific terms, such description is for illustrative purposes only, and it is to be understood that changes and variations may be made without departing from the spirit or scope of the following claims.

## Claims

1. A broadcast method in a mobile communication system, wherein broadcast is carried out in a radio base station device when the same information is broadcast to a plurality of cells.

2. A broadcast method in a mobile communication system including a radio control device and a radio base station device, the method comprising:
at said radio control device;
setting a special number for broadcast in the cell number in a control signal for setting a common channel used for broadcast to set the control signal in said radio base station device;
transmitting a common channel data signal to be broadcast to said radio base station device;
at said radio base station device;
receiving, from said radio control device, the common channel data signal to be broadcast; and
broadcasting the common channel data signal to each cell.

3. A broadcast method in a mobile communication system including a radio control device and a radio base station device, the method comprising:
at said radio control device;
setting a plurality of cell numbers in the cell number in a control signal for setting a common channel used for broadcasting to set the control signal in said radio base station device; and
transmitting a common channel data signal to be broadcast to said radio base station device;
at the radio base station device;
receiving, from said radio control device, the common channel data signal to be broadcast; and
broadcasting the common channel data signal to cells having the respective cell numbers set in the control signal.

4. A mobile communication system comprising a radio control device and a radio base station device:
said radio control device including: means for setting a special number for broadcast in the cell number in a control signal for setting a common channel used for broadcast to set the control signal in said radio base station device; and means for transmitting a common channel data signal to be broadcast to said radio base station device ;
said radio base station device including: means for receiving, from said radio control device, the common channel data signal to be broadcast; and means for broadcasting the common channel data signal to each cell.

5. A mobile communication system comprising a radio control device and a radio base station device,
said radio control device including; means for setting a plurality of cell numbers in the cell number in a control signal for setting a common channel used for broadcasting to set the control signal in said radio base station device; and means for transmitting a common channel data signal to be broadcast to said radio base station device; and
said radio base station device including : means for receiving, from said radio control device, the common channel data signal to be broadcast; and means for broadcasting the common channel data signals to cells having the respective cell numbers set in the control signal.

6. A radio control device that is, together with a radio base station device, included in a mobile communication system, said radio control device comprising:
means for setting a special number for broadcast in the cell number in a control signal for setting a common channel used for broadcast to set the control signal in said radio base station device; and
means for transmitting a common channel data signal to be broadcast to said radio base station device.

7. A radio control device that is, together with a radio base station device, included in a mobile communication system, said radio control device comprising:
means for setting a plurality of cell numbers in the cell number in a control signal for setting a common channel used for broadcasting to set the control signal in said radio base station device; and
means for transmitting a common channel data signal to be broadcast to said radio base station device;

8. A radio base station device that is, together with a radio control device, included in a mobile communication system, said radio base station device comprising:
means for receiving a control signal for setting a common channel used for broadcast having a cell number in which a special number is set;
means for receiving, from said radio control device, a common channel data signal to be broadcast ; and
means for broadcasting the common channel data signals to each cell.

9. A radio base station device that is, together with a radio control device, included in a mobile communication system, said radio base station device comprising:
means for receiving a control signal for setting a common channel used for broadcast having a cell number in which a plurality cell numbers are set;
means for receiving, from said radio control device, a common channel data signal to be broadcast; and
means for broadcasting the common channel data signals to cells having the respective cell numbers set in the control signal.
